# EUROPEAN PATENT APPLICATION

(11) **EP 4 351 198 A1**
(43) Date of publication of application: **10.04.2024**
(21) Application number: 22811014.4
(22) Date of filing: 29.03.2022
(51) Int. Cl.: H04W 16/28, H04W 72/04, H04W 72/12

(54) **TERMINAL, WIRELESS COMMUNICATION METHOD, AND BASE STATION**

(30) Priority: 26.05.2021 JP 2021088742
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/015542
(87) International publication number: WO 2022/249739

(57) **Abstract**

To appropriately perform beam failure detection or beam failure recovery even in a case where a plurality of transmission/reception points are used. A terminal according to an aspect of the present disclosure includes: a receiving section that receives information regarding a configuration of beam failure detection for each transmission/reception point (TRP) and information regarding a configuration of an uplink control channel resource corresponding to a scheduling request; and a control section that, when a beam failure is detected in a first TRP, controls transmission of a scheduling request by using one of an uplink control channel resource corresponding to the first TRP and an uplink control channel resource corresponding to a second TRP different from the first TRP.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

In existing LTE systems (LTE Rel. 8 to 15), radio link quality is monitored (radio link monitoring (RLM)). When a radio link failure (RLF) is detected by RLM, re-establishment of radio resource control (RRC) connection is requested of the user terminal (user equipment: UE).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In future radio communication systems (for example, NR), it has been studied to perform a procedure to detect a beam failure (BF) and switch to another beam (may also be referred to as a beam failure recovery (BFR) procedure, BFR, link recovery procedures, and the like).

In Rel. 17 NR and beyond, it is also assumed that a terminal (UE) performs communication using a plurality of transmission/reception points (TRP)/UE panels. In this case, while it is conceivable that beam management (for example, beam failure detection) is performed in a plurality of TRPs/a plurality of UE panels, how to control beam failure detection (BFD) or beam failure recovery (BFR) in each TRP/UE panel is a problem. If beam failure detection or beam failure recovery in each TRP/UE panel cannot be properly controlled, communication throughput may decrease or communication quality may deteriorate.

The present disclosure has been made in view of the above, and an object of the present disclosure is to provide a terminal, a radio communication method, and a base station capable of appropriately performing beam failure detection or beam failure recovery even when a plurality of transmission/reception points are used.

### Solution to Problem

A terminal according to an aspect of the present disclosure includes: a receiving section that receives information regarding a configuration of beam failure detection for each transmission/reception point (TRP) and information regarding a configuration of an uplink control channel resource corresponding to a scheduling request; and a control section that, when a beam failure is detected in a first TRP, controls transmission of a scheduling request by using one of an uplink control channel resource corresponding to the first TRP and an uplink control channel resource corresponding to a second TRP different from the first TRP.

### Advantageous Effects of Invention

According to one aspect of the present disclosure, beam failure detection or beam failure recovery can be appropriately performed even when a plurality of transmission/reception points are used.

### Brief Description of Drawings

Fig. 1 is a diagram illustrating an example of a beam recovery procedure in Rel. 15 NR.
Fig. 2A to Fig. 2C are diagrams illustrating examples of configurations of PUCCH resources and spatial relations for a scheduling request.
Fig. 3A to Fig. 3C are diagrams illustrating examples of BFR types applied to cells in a cell group according to a first aspect.
Fig. 4 is a diagram illustrating an example of transmission control of SR according to the first aspect.
Fig. 5A and Fig. 5B are diagrams illustrating other examples of BFR types applied to cells in a cell group according to a first embodiment.
Fig. 6 is a diagram illustrating an example of transmission control of SR according to the first aspect.
Fig. 7A and Fig. 7B are diagrams illustrating examples of cases of configuring a plurality of SRs according to a second aspect.
Fig. 8 is a diagram illustrating an example of association between a TRP index and a PUCCH-resource-for-SR index according to a third aspect.
Fig. 9A and Fig. 9B are diagrams illustrating examples of association between a TRP index and an SR configuration/a spatial relation of a PUCCH resource for SR according to a fourth aspect.
Fig. 10 is a diagram illustrating an example of a schematic configuration of a radio communication system according to one embodiment.
Fig. 11 is a diagram illustrating an example of a configuration of a base station according to one embodiment.
Fig. 12 is a diagram illustrating an example of a configuration of a user terminal according to one embodiment.
Fig. 13 is a diagram illustrating an example of a hardware configuration of the base station and the user terminal according to one embodiment.

### Description of Embodiments

### (Beam Failure Detection)

In NR, communication is performed using beam forming. For example, a UE and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

In a case where beam forming is used, degradation of radio link quality is assumed because it becomes susceptible to interference by an obstacle. A radio link failure (RLF) may frequently occur due to degradation of the radio link quality. When the RLF occurs, cell reconnection is required, and thus frequent occurrence of the RLF leads to degradation of system throughput.

In the NR, to suppress the occurrence of the RLF, a procedure is performed to switch to another beam (which may also be referred to as beam recovery (BR), beam failure recovery (BFR), Layer 1/Layer 2 (L1/L2) beam recovery, or the like) in a case where quality of a specific beam degrades. The BFR procedure may be simply referred to as BFR.

Note that a Beam Failure (BF) in the present disclosure may also be referred to as a link failure.

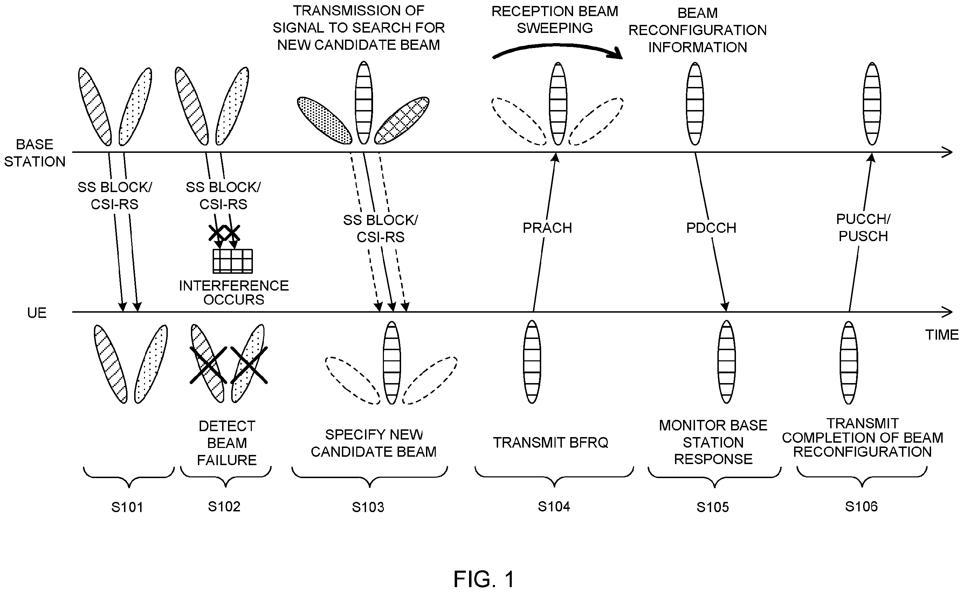

Fig. 1 is a diagram illustrating an example of a beam recovery procedure in Rel. 15 NR. The number of beams, or the like, is an example, and is not limited to these. In an initial state (step S101) in Fig. 1, the UE performs measurement based on a reference signal (RS) resource transmitted using two beams.

The RS may be at least one of a synchronization signal block (SSB) or a channel state information RS (CSI-RS). Note that an SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal configured by extending or changing these. The RS measured in step S101 may be referred to as an RS for beam failure detection (a beam failure detection RS (BFD-RS)), an RS for use in a beam recovery procedure (BFR-RS), or the like.

In step S102, interference in radio waves from the base station occurs, whereby the UE cannot detect the BFD-RS (or reception quality of the RS degrades). Such interference may occur due to, for example, an effect of an obstacle between the UE and the base station, fading, interference, or the like.

After a given condition is satisfied, the UE detects a beam failure. For example, the UE may detect occurrence of a beam failure in a case where a Block Error Rate (BLER) is less than a threshold value for all of configured BFD-RS resource configurations (BFD-RSs). When the occurrence of the beam failure is detected, a lower layer (physical (PHY) layer) of the UE may perform notification (indication) of a beam failure instance to a higher layer (MAC layer).

Note that a criterion for determination is not limited to the BLER, and may be reference signal received power in a physical layer (Layer 1 reference signal received power (L1-RSRP)). Further, instead of RS measurement or in addition to RS measurement, beam failure detection may be performed on the basis of a downlink control channel (physical downlink control channel (PDCCH)) or the like. The BFD-RS may be expected to be in a quasi-co-location (QCL) with a DMRS of the PDCCH monitored by the UE.

Here, the QCL is an indicator indicating a statistical property of a channel. For example, when one signal/channel has a QCL relationship with another signal/channel, between these different signals/channels, it may mean that it is possible to assume that they are the same at least in one of doppler shift, doppler spread, average delay, delay spread, spatial parameter (e.g., spatial Rx parameter) (i.e., QCL for at least one of these).

Note that, the spatial Rx parameter may correspond to a reception beam of the UE (for example, a reception analog beam), and the beam may be specified on the basis of spatial QCL. The QCL (or at least one element of the QCL) in the present disclosure may be replaced with the spatial QCL (sQCL).

Information regarding the BFD-RS (for example, an RS index, resource, number, number of ports, precoding, or the like), information regarding beam failure detection (BFD) (for example, the above-described threshold value), or the like may be configured in (notified to) the UE by using higher layer signaling, or the like. The information regarding the BFD-RS may also be referred to as information regarding a resource for BFR, or the like.

In the present disclosure, the higher layer signaling may be, for example, any of Radio Resource Control (RRC) signaling, Medium Access Control (MAC) signaling, broadcast information, and the like, or a combination thereof.

For example, a media access control control element (MAC Control Element (CE)), a MAC protocol data unit (PDU), or the like may be used for the MAC signaling. The broadcast information may be, for example, a master information block (MIB), a system information block (SIB), remaining minimum system information (RMSI), other system information (OSI), or the like.

The higher layer of the UE (for example, MAC layer) may start a given timer (which may also be referred to as a beam failure detection timer) in a case where a beam failure instance notification is received from the PHY layer of the UE. The MAC layer of the UE may trigger BFR (for example, start any one of random access procedures to be described later) after receiving the beam failure instance notification a given number of times (for example, beamFailureInstanceMaxCount configured by RRC) or more before the timer expires.

The base station may determine that UE has detected a beam failure when there is no notification from UE or when a given signal (beam recovery request in Step S104) is received from UE.

In Step S103, for beam recovery, UE starts a search for a new candidate beam to be newly used for communication. The UE may measure a given RS to select a new candidate beam corresponding to the RS. RS measured in Step S103 may be referred to as, for example, a new candidate beam RS, a new candidate beam identification RS (NCBI-RS), CBI-RS, and a candidate beam RS (CB-RS). The NCBI-RS may be the same as or different from the BFD-RS. Note that a new candidate beam may also be simply referred to as a candidate beam or a candidate RS.

The UE may determine a beam corresponding to an RS that satisfies a given condition as a new candidate beam. The UE may determine a new candidate beam on the basis of, for example, an RS whose L1-RSRP exceeds a threshold value among configured NCBI-RSs. A criterion is not limited to L1-RSRP. L1-RSRP regarding SSB may be referred to as SS-RSRP. L1-RSRP regarding a CSI-RS may also be referred to as CSI-RSRP.

Information regarding an NCBI-RS (for example, an RS resource, number, number of ports, precoding, or the like), information regarding new candidate beam identification (NCBI) (for example, the above-described threshold value), or the like may be configured in (notified) the UE using higher layer signaling, or the like. The information regarding the new candidate RS (or the NCBI-RS) may be acquired on the basis of the information regarding the BFD-RS. Information regarding NCBI-RS may be referred to as, for example, information regarding NBCI resources.

Note that the BFD-RS, NCBI-RS, or the like may be replaced with a radio link monitoring reference signal (RLM-RS).

In step S104, the UE that has specified the new candidate beam transmits a beam failure recovery request (BFRQ). The beam failure recovery request may also be referred to as a beam recovery request signal, a beam failure recovery request signal, or the like.

The BFRQ may be transmitted using, for example, at least one of a physical uplink control channel (PUCCH), a physical random access channel (PRACH), a physical uplink shared channel (PUSCH), or a configured grant (CG) PUSCH.

The BFRQ may include information on the new candidate beam/new candidate RS specified in step S103. The resource for the BFRQ may be associated with the new candidate beam. Notification of the information on the beam may be performed using, for example, a beam index (BI), a port index of a given reference signal, an RS index, a resource index (for example, CSI-RS resource indicator (CRI), SSB resource indicator (SSBRI)), or the like.

In the Rel. 15 NR, contention-based BFR (CB-BFR) that is BFR based on a contention-based random access (RA) procedure and contention-free BFR (CF-BFR) that is BFR based on a non-contention based random access procedure have been studied. In the CB-BFR or the CF-BFR, the UE may transmit a preamble (which is also referred to as an RA preamble, a physical random access channel (PRACH), an RACH preamble, or the like) as the BFRQ by using a PRACH resource.

In CB-BFR, the UE may transmit a preamble randomly selected from one or a plurality of preambles. Meanwhile, in CF-BFR, the UE may transmit a preamble uniquely allocated to the UE from the base station. In CB-BFR, the base station may allocate an identical preamble to a plurality of UEs. In CF-BFR, the base station may allocate preambles individually to the UEs.

Note that CB-BFR and CF-BFR may also be referred to as "CB PRACH-based BFR (CBRA-BFR (contention-based PRACH-based BFR))" and "CF PRACH-based BFR (CFRA-BFR (contention-free PRACH-based BFR)), respectively. CBRA-BFR may also be referred to as CBRA for BFR. CFRA-BFR may also be referred to as "CFRA for BFR".

In either CB-BFR or CF-BFR, the information regarding the PRACH resource (RA preamble) may be reported by, for example, higher layer signaling (RRC signaling and so on). For example, the information may include information indicating a correspondence relationship between the detected DL-RS (beam) and the PRACH resource, and different PRACH resources may be associated with each DL-RS.

In step S105, the base station that has detected the BFRQ transmits a response signal (which may also be referred to as a "gNB response" or the like) for the BFRQ from the UE. The response signal may include reconfiguration information (for example, DL-RS resource configuration information) for one or more beams.

The response signal may be transmitted, for example, in a UE common search space of a PDCCH. The response signal may be reported using PDCCH (DCI) scrambled in cyclic redundancy check (CRC) by an identifier of the UE (for example, cell-radio RNTI (C-RNTI)). The UE may determine at least one of a transmission beam or a reception beam to be used, on the basis of beam reconfiguration information.

The UE may monitor the response signal on the basis of at least either a control resource set (CORESET) for BFR or a search space set for BFR.

For the CB-BFR, contention resolution may be determined to be successful in a case where the UE receives a PDCCH corresponding to the C-RNTI regarding the UE itself.

Regarding the processing in step S105, a period may be set for the UE to monitor a response from the base station (for example, gNB) for the BFRQ. The period may be referred to as, for example, a gNB response window, a gNB window, and a beam recovery request response window. The UE may retransmit the BFRQ in a case where no gNB response is detected within the window period.

In step S106, the UE may transmit a message indicating that beam reconfiguration is completed to the base station. The message may be transmitted by the PUCCH or PUSCH, for example.

Beam recovery success (BR success) may represent a case where step S106 is reached, for example. On the other hand, beam recovery failure (BR failure) may correspond to, for example, a case where the number of times of BFRQ transmission has reached a given number, or a beam-failure-recovery-timer has expired.

Rel. 15 supports a scheme in which a beam recovery procedure for a beam failure detected in an SpCell (PCell/PSCell) (for example, notification of a BFRQ) is performed by using a random access procedure.

On the other hand, Rel. 16 supports a scheme in which a beam recovery procedure for a beam failure detected in an SCell (for example, notification of a BFRQ (step S104 of Fig. 1)) is performed by using at least one of transmission of a PUCCH for BFR (for example, a scheduling request (SR)) and transmission of a MAC CE for BFR (for example, a UL-SCH). For example, the UE may transmit information regarding beam failure by using MAC CE-based two steps. The information regarding beam failure may include information regarding a cell in which a beam failure is detected and information regarding a new candidate beam (or a new candidate RS index).

### [Step 1]

When a BF is detected, a PUCCH-BFR (scheduling request (SR)) may be transmitted from the UE to the SpCell (for example, PCell/PSCell). The PUCCH-BFR may be referred to as a PUCCH-SR, a PUCCH-SR for BFR, or a PUCCH for SR.

Then, a UL grant (for example, DCI) for the following Step 2 may be transmitted from the PCell/PSCell to the UE. In a case where, when a beam failure is detected, there is a MAC CE (or UL-SCH) for transmitting information regarding a new candidate beam, step 1 (for example, PUCCH transmission) may be omitted, and step 2 (for example, MAC CE transmission) may be performed.

### [Step 2]

The UE may transmit information regarding a (failed) cell in which a beam failure is detected (for example, a cell index) and information regarding a new candidate beam to a base station (PCell/PSCell) via an uplink channel (for example, a PUSCH) by using a MAC CE. After that, a BFR procedure may be performed, and a response signal from the base station may be received; after a given period (for example, 28 symbols) from the reception of the response signal, the QCL of the PDCCH/PUCCH/PDSCH/PUSCH may be updated to a new beam.

Note that numbers of these steps are merely numbers for description, and a plurality of these steps may be combined, or the order of these steps may be changed. Further, whether or not to perform BFR may be configured in the UE by using higher layer signaling.

Meanwhile, in a future radio communication system (for example, Rel. 17 or later), extension of beam management of a UE having a plurality of panels (multiple panels) or beam management using a plurality of transmission/reception points (multiple transmission/reception points (TRPs)) is being studied.

In the beam failure detection/beam failure recovery of Rel. 17 or later, it is assumed that a BFRQ framework based on an SCell BFR BFRQ of Rel. 16 is supported. In this case, up to X PUCCH-SR resources (for example, dedicated PUCCH-SR resources) may be configured in a cell group. X may be 1, or 2 or 2 or more.

In the present disclosure, the cell group may be, for example, at least one of a master cell group (MCG), a secondary cell group (SCG), and a PUCCH cell group. The MCG and the SCG may be groups configured in dual connectivity (DC). The PUCCH cell group may be a group configured in PUCCH transmission.

Further, in Rel. 17 or later, it is conceivable that beam failure detection/beam failure recovery is performed for each of a plurality of TRPs/a plurality of UE panels in a cell (for example, per-TRP BFR). For example, it is conceivable that transmission of a scheduling request (SR) is supported for BFR for each TRP/in units of TRPs.

In this case, how to control the configuration of a scheduling request (for example, an SR configuration) is a problem. For example, how to control the configuration of an SR (for example, an SR index/SchedulingRequestID/SR ID), the configuration of a PUCCH resource (for example, a PUCCH-SR resource), and the configuration of a spatial relation corresponding to a PUCCH resource for a cell group (or cell/TRP) is a problem. Alternatively, how to control the transmission of an SR (or PUCCH-SR) for BFR on the basis of a BFR type (for example, whether per-TRP BFR is configured/applied or not) configured/applied to each cell included in a cell group is a problem.

With a focus on a case where a beam failure recovery procedure (a UE operation based on beam failure detection/beam failure recovery request/beam failure recovery) is applied in units of one or more TRPs/panels, the present inventors have studied a method for configuring an SR/transmitting an SR in such a case; thus, the present inventors have conceived the present embodiment.

Hereinafter, embodiments according to the present disclosure will be described in detail with reference to the drawings. The respective aspects may be applied independently or may be applied in combination.

In the present disclosure, the UE may be a UE that performs transmission and reception with a TRP using a plurality of panels. Each panel may correspond to a different TRP, one panel may correspond to a plurality of TRPs, or a plurality of panels may correspond to one TRP.

In the present disclosure, a panel (or a panel index) of the UE may correspond to a specific group. In this case, the UE may assume that the beams/RS of each group is measured in each panel of the UE. The UE may assume that beams of a plurality of groups are simultaneously received (using different panels).

In the present disclosure, the TRP may be replaced with the panel of the TRP (or the base station), an RS group, an antenna port group, a spatial relation group, a QCL group, a TCI state, a TCI state group, a CORESET group, a CORESET pool, and the like. Further, a TRP index may be read as an RS group index, an antenna port group index, a QCL group index, a TCI state index, a TCI state group index, a CORESET group index, a CORESET pool index, or the like.

In the present disclosure, the panel of the UE may be replaced with an RS group, an antenna port group, a spatial relation group, a QCL group, a TCI state group, a CORESET group, and the like.

In the present disclosure, a panel may be associated with a group index of an SSB/CSI-RS group. Further, in the present disclosure, a panel may be associated with a TRP. In the present disclosure, a plurality of panels may be associated with a group index of group beam-based reporting. In the present disclosure, a panel may be associated with a group index of an SSB/CSI-RS group for group beam-based reporting.

In the present disclosure, a serving cell/cell may be read as a PCell, a PSCell, an SpCell, or an SCell. In the following description, a case where two TRPs correspond to a serving cell is taken as an example; however, three or more TRPs may correspond to a serving cell.

In the present disclosure, a BFD RS for which a beam failure is detected, a failed BFD RS, a TRP for which a beam failure is detected, a failed TRP, a UE panel for which a beam failure is detected, and a failed UE panel may be replaced with each other.

In the present disclosure, "A/B", "at least one of A or B", and "A and B" may be interchangeable. In the present disclosure, A/B/C may be read as at least one of A, B, and C.

### (Configuration Example of SR)

For a configuration of an SR, at least one of options 0, 1, and 2 below may be supported.

### <Option 0>

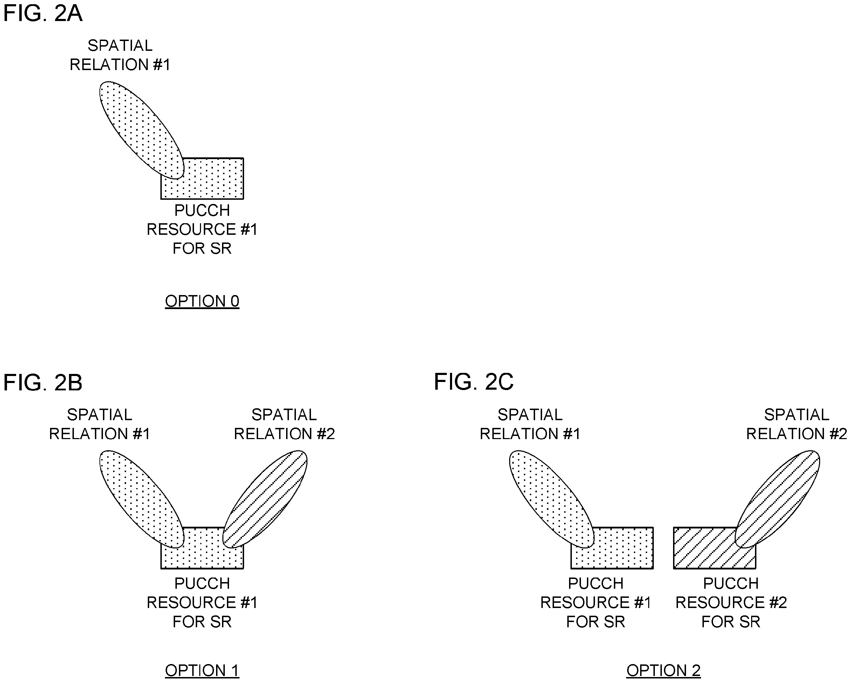

In an SR (for example, an SR index/SchedulingRequestID) in a cell group, X₀ PUCCH resources (or PUCCHs for SR) are configured, and Y₀ spatial relations are configured for the PUCCH resource. In the following description, X₀ = 1 and Y₀ = 1 are assumed (see Fig. 2A).

Fig. 2A illustrates a case where one PUCCH resource for SR (herein, PUCCH resource for SR #1) is configured for an SR configured in a cell group (or SpCell), and one spatial relation (herein, spatial relation #1) is configured for the PUCCH resource for SR. Note that the numbers of X₀ and Y₀ are not limited thereto.

In option 0, a method of configuring an SR for SCell BFR in Rel. 16 may be applied. Option 0 may be read as a zeroth SR/zeroth SR configuration.

### <Option 1>

In an SR (for example, an SR index/SchedulingRequestID) for each cell group, a maximum of X₁ PUCCH resources (for example, dedicated PUCCH-SR resources) are configured in the cell group, and Y₁ spatial relations are configured for the PUCCH resource. In the following description, X₁ = 1 and Y₁ = 2 are assumed (see Fig. 2B).

Fig. 2B illustrates a case where one PUCCH resource for SR (herein, PUCCH resource for SR #1) is configured for an SR configured in a cell group (or SpCell) and two spatial relations (herein, spatial relations #1 and #2) are configured for the PUCCH resource for SR. Note that the numbers of X₁ and Y₁ are not limited thereto. Option 1 may be read as a first SR/first SR configuration.

### <Option 2>

In an SR (for example, an SR index/SchedulingRequestID) for each cell group, a maximum of X₂ PUCCH resources (for example, dedicated PUCCH-SR resources) are configured in the cell group, and Y₂ spatial relations are configured for each PUCCH resource. In the following description, X₂ = 2 (or 2 or more) and Y₂ = 1 are assumed (see Fig. 2C).

Fig. 2C illustrates a case where two PUCCH resources for SR (herein, PUCCH resources for SR #1 and #2) are configured for an SR configured in a cell group (or SpCell) and one spatial relation (herein, spatial relation #1 or #2) is configured in each PUCCH resource for SR. Although Fig. 2C illustrates a case where different spatial relations are configured in PUCCH resource for SR #1 and PUCCH resource for SR #2, the same spatial relation may be configured. Note that the numbers of X₂ and Y₂ are not limited thereto. Option 2 may be read as a second SR/second SR configuration.

The UE may use higher layer signaling/DCI to receive, from a network (for example, a base station), at least one of information regarding an SR (for example, an SR index/SchedulingRequestID) in a cell group, information regarding a PUCCH resource (for example, a PUCCH-SR resource) in a cell group, and information regarding a spatial relation configured in a PUCCH resource.

The information regarding an SR may be at least one of information indicating a configured SR index (or SchedulingRequestID) and information indicating the number of configured SRs. The information regarding a PUCCH resource in a cell group may be at least one of information indicating a PUCCH resource and information indicating the number of configured PUCCH resources. The information regarding a spatial relation may be at least one of information indicating a spatial relation and information indicating the number of configured spatial relations. In the present disclosure, a spatial relation, a beam, a spatial filter, a spatial domain filter, a TCI state, and a QCL may be replaced with each other.

Further, for each cell (for example, a cell included in a cell group), the UE may receive information regarding a configuration of BFR for each BFR/in units of BFRs from a network (for example, a base station) by using higher layer signaling/DCI. The information regarding a configuration of BFR for each BFR/in units of BFRs may be information indicating whether BFR for each BFR/in units of BFRs is configured/applied or not. Alternatively, the information regarding a configuration of BFR for each BFR/in units of BFRs may be information indicating a BFR type (BFR for each BFR/in units of BFRs, or cell-specific BFR).

The UE may control the transmission of an SR or a PUCCH-SR on the basis of at least one of the number of SRs (or the number of SR indexes) configured for each cell group and a BFR type (for example, per-TRP BFR/per-cell BFR) configured/applied to a specific cell included in a cell group. In this case, the UE may control the transmission of an SR or a PUCCH-SR on the basis of at least one of the number of configured PUCCH resources and the number of spatial relations configured in (or corresponding to) a PUCCH resource.

### (First Aspect)

In a first aspect, a case where, in BFR, up to one SR (or SR index) can be configured for each cell group (or a case where only one SR is configured) will be described as an example. The BFR may include SCell BFR in Rel. 16/per-TRP BFR in Rel. 17. In the following description, a PUCCH may be read as a PUCCH for SR, and a PUCCH resource may be read as a PUCCH-SR resource or a PUCCH resource for SR. Further, a PUCCH for SR and a PUCCH resource for SR may be replaced with each other. Per-TRP BFR may be read as BFR in units of TRPs. Cell-specific BFR may be read as BFR in units of cells

### <Case A>

A case where per-TRP BFR is configured in at least a specific cell in a cell group or a case where a specific cell in which per-TRP BFR is supported is configured in a cell group is assumed. In this case, a per-TRP BFR procedure may be applied to the specific cell.

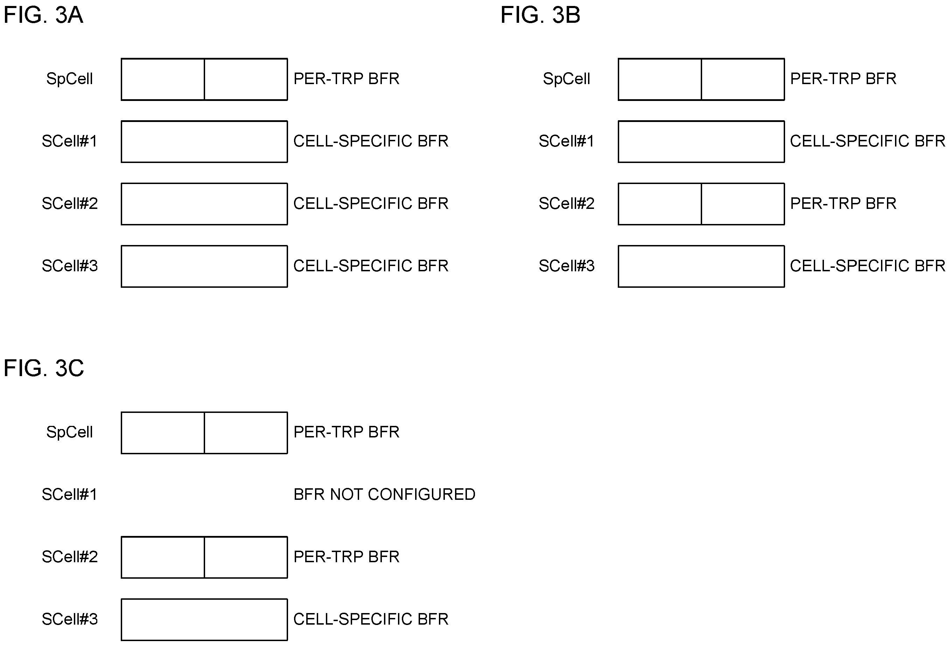

The specific cell may be an SpCell (for example, a PCell/PSCell). In this case, the cell group including an SpCell may include, for example, the SpCell and one or more SCells (see Fig. 3A to Fig. 3C). In case A, at least the SpCell may support per-TRP BFR, and some or all of the SCells may have a configuration of supporting per-TRP BFR or a configuration of not supporting per-TRP BFR.

For example, as illustrated in Fig. 3A, per-TRP BFR may be configured/applied to the SpCell, and cell-specific BFR may be configured/applied to an SCell (herein, SCells #1 to #3). Alternatively, as illustrated in Fig. 3B, per-TRP BFR may be configured/applied to the SpCell, per-TRP BFR may be configured/applied to some SCells (herein, SCell #2), and cell-specific BFR may be configured/applied to a remaining SCell (herein, SCells #1 and #3). Alternatively, as illustrated in Fig. 3C, BFR itself may not be configured in some SCells (herein, SCell #1).

Further, at least one of option 1 above and option 2 above may be applied as a configuration of an SR for BFR for the cell group. That is, two beams/spatial relations may be configured for one PUCCH (or PUCCH resource) (see option 1 above/Fig. 2B), or two beams/spatial relations may be configured for two PUCCHs (or PUCCH resources) (see option 2 above /Fig. 2C).

### <<Beam failure in SpCell>>

In a case where a plurality of TRPs (for example, TRP #0 and TRP #1) are included in the SpCell and a beam failure (for example, a TRP failure) is detected in some of the TRPs (for example, TRP #0), an SR may be triggered.

### -Case A1

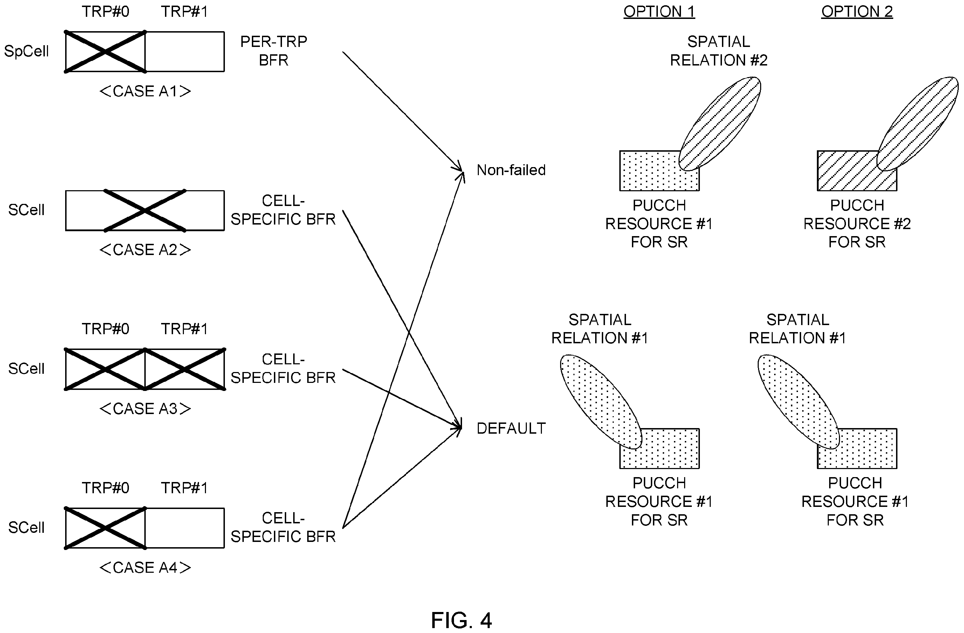

A case where one PUCCH resource is configured for a cell group/SR, two spatial relations are configured in the PUCCH resource (option 1 above), and a beam failure is detected in TRP #0 (or an SR is triggered on the basis of a beam failure of TRP #0) is assumed. In this case, the UE may transmit an SR by using a spatial relation (herein, spatial relation #2) associated with another TRP (for example, TRP #1) (see case A1/option 1 of Fig. 4).

Thereby, the UE can transmit an SR by using a spatial relation in which a beam failure is not detected (or a spatial relation of high quality).

Alternatively, a case where two PUCCH resources are configured for a cell group/SR, one spatial relation is configured in each PUCCH resource (option 2 above), and a beam failure is detected in TRP #0 (or an SR is triggered on the basis of a beam failure of TRP #0) is assumed.

In this case, the UE may transmit an SR by using a PUCCH for SR/PUCCH resource for SR (herein, PUCCH resource for SR #2) associated with another TRP (for example, TRP #1) (see case A1/option 2 of Fig. 4). Thereby, the UE can transmit an SR by using a PUCCH resource in which a beam failure is not detected (or a PUCCH resource of high quality).

Further, the UE may use a PUCCH for SR/PUCCH resource for SR associated with a TRP other than the other TRP (for example, TRP #1). For example, the UE may transmit an SR by using a PUCCH for SR/PUCCH resource for SR (herein, PUCCH resource for SR #1) associated with a TRP in which a beam failure is detected (for example, TRP #0).

### <<Beam failure in SCell>>

### [Per-TRP BFR is not configured]

In a case where a per-TRP BFR operation is not configured in an SCell, cell-specific BFR may be applied to the SCell. When a beam failure (for example, a TRP failure) is detected in an SCell, an SR may be triggered. The SR may be transmitted by a PUCCH (for example, a PUCCH-SR) of an SpCell included in a cell group to which the SCell belongs.

### -Case A2

A case where one PUCCH resource is configured for a cell group/SR, two spatial relations are configured in the PUCCH resource (option 1 above), and a beam failure is detected in an SCell (or an SR is triggered on the basis of a beam failure of an SCell) is assumed. In this case, the UE may transmit a default beam/default spatial relation for SR (or transmit an SR by using a default beam/default spatial relation) (see case A2/option 1 of Fig. 4).

Alternatively, a case where two PUCCH resources are configured for a cell group/SR, one spatial relation is configured in each PUCCH resource (option 2 above), and a beam failure is detected in an SCell (or an SR is triggered on the basis of a beam failure of an SCell) is assumed. In this case, the UE may transmit a default PUCCH/default PUCCH resource for SR (or transmit an SR by using a default PUCCH/default PUCCH resource) (see case A2/option 2 of Fig. 4).

Thus, when the UE has detected a beam failure in an SCell, the UE may control the transmission of an SR by using a default spatial relation (option 1) or a default PUCCH resource (option 2). Thereby, SR transmission can be appropriately controlled even in a case where a plurality of spatial relations/PUCCH resources for SR transmission are configured.

In option 1, the default beam/default spatial relation for SR may be defined in advance in specifications, may be determined on the basis of a given rule (for example, the order of the indexes of spatial relations, or the like), or may be configured from a base station to the UE by higher layer signaling or the like. For example, the default beam/default spatial relation for SR may be the 1st spatial relation of an SR, the lowest spatial relation index (for example, the lowest spatial relation ID) of an SR, or a spatial relation of an SR associated with the lowest control resource set index (for example, lowest CORESETPoolIndex).

In option 2, the default PUCCH/default PUCCH resource for SR may be defined in advance in specifications, may be determined on the basis of a given rule (for example, the order of the indexes of PUCCH resources, or the like), or may be configured from a base station to the UE by higher layer signaling or the like. For example, the default PUCCH/default PUCCH resource for SR may be the 1st PUCCH resource for SR, the lowest PUCCH resource (for example, the lowest PUCCH resource ID) for SR, or a PUCCH resource for SR associated with the lowest control resource set index (for example, lowest CORESETPoolIndex).

### [Per-TRP BFR is configured]

In a case where a per-TRP BFR operation is configured in an SCell, a per-TRP BFR procedure may be applied to the SCell.

In a case where a plurality of TRPs (for example, TRP #0 and TRP #1) are included in an SCell and a beam failure (for example, a TRP failure) is detected in at least some of the TRPs (for example, TRP #0), an SR may be triggered.

### -Case A3

A case where one PUCCH resource is configured for a cell group/SR, two spatial relations are configured in the PUCCH resource (option 1 above), and beam failures are detected in all TRPs (for example, TRP #0 and TRP #1) (or an SR is triggered on the basis of beam failures of two TRPs) is assumed. In this case, the UE may transmit a default beam/default spatial relation for SR (or transmit an SR by using a default beam/default spatial relation) (see case A3/option 1 of Fig. 4).

Alternatively, a case where two PUCCH resources are configured for a cell group/SR, one spatial relation is configured in each PUCCH resource (option 2 above), and beam failures are detected in all TRPs (for example, TRP #0 and TRP #1) (or an SR is triggered on the basis of beam failures of two TRPs) is assumed. In this case, the UE may transmit a default PUCCH/default PUCCH resource for SR (or transmit an SR by using a default PUCCH/default PUCCH resource) (case A3/option 2 of Fig. 4).

Thus, when the UE has detected beam failures in a plurality of TRPs (for example, all TRPs) of an SCell, the UE may control the transmission of an SR by using a default spatial relation (option 1) or a default PUCCH resource (option 2). Thereby, SR transmission can be appropriately controlled even in a case where a plurality of spatial relations/PUCCH resources for SR transmission are configured.

### -Case A4

Alternatively, a case where one PUCCH resource is configured for a cell group/SR, two spatial relations are configured in the PUCCH resource (option 1 above), and a beam failure is detected in TRP #0 (or an SR is triggered on the basis of a beam failure of TRP #0) is assumed. In this case, the UE may transmit a default beam/default spatial relation for SR (or transmit an SR by using a default beam/default spatial relation) (see case A4/option 1 of Fig. 4). Alternatively, the UE may transmit an SR by using a spatial relation (Non-failed) associated with another TRP (for example, TRP #1) (see case A4/option 1 of Fig. 4).

Alternatively, a case where two PUCCH resources are configured for a cell group/SR, one spatial relation is configured in each PUCCH resource (option 2 above), and a beam failure is detected in TRP #0 (or an SR is triggered on the basis of a beam failure of TRP #0) is assumed. In this case, the UE may transmit a default PUCCH/default PUCCH resource for SR (or transmit an SR by using a default PUCCH/default PUCCH resource) (see case A4/option 2 of Fig. 4).

Alternatively, the UE may transmit an SR by using a PUCCH for SR/PUCCH resource for SR (Non-failed) associated with another TRP (for example, TRP #1) (see case A4/option 2 of Fig. 4).

Further, the UE may use a PUCCH for SR/PUCCH resource for SR associated with a TRP other than the other TRP (for example, TRP #1). For example, the UE may transmit an SR by using a PUCCH for SR/PUCCH resource for SR associated with a TRP in which a beam failure is detected (for example, TRP #0).

Note that, in the present embodiment, which TRP the PUCCH for SR/PUCCH resource for SR for use corresponds to may be determined on the basis of a given condition. For example, the given condition may be a cell (or a cell index) in which a beam failure is detected in a TRP.

For example, when a beam failure is detected in a TRP of a cell (for example, an SpCell) where SR transmission is performed by using a PUCCH resource for SR, a PUCCH resource for SR corresponding to a TRP in which a beam failure is not detected may be used. Further, when a beam failure is detected in a TRP of a cell (for example, an SCell) different from a cell (for example, an SpCell) where SR transmission is performed by using a PUCCH resource for SR, a PUCCH resource for SR corresponding to the TRP in which a beam failure is detected may be used. Alternatively, the opposite configuration may be applied.

### <Case B>

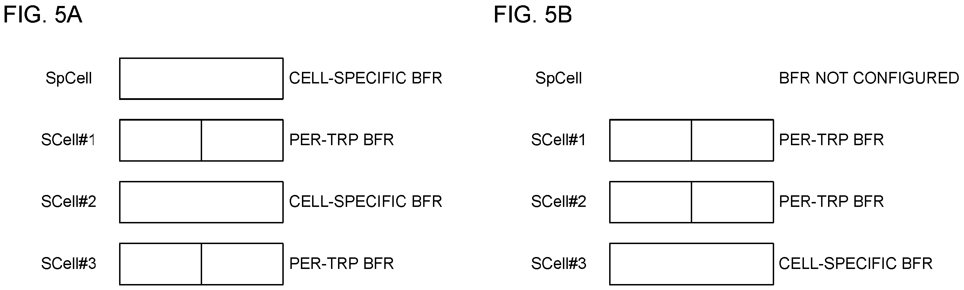

A case where, in a cell group, a per-TRP BFR operation is not configured (or BFR itself is not configured) in a specific cell (for example, an SpCell) and a per-TRP BFR operation is configured in at least one other cell (for example, an SCell) is assumed (see Fig. 5A and Fig. 5B). In this case, a per-TRP BFR procedure may be applied to the SCell, and cell-specific BFR may be applied to the SpCell.

For example, as illustrated in Fig. 5A, cell-specific BFR may be configured/applied to the SpCell, per-TRP BFR may be configured/applied to some SCells (herein, SCells #1 and #3), and cell-specific BFR may be configured/applied to a remaining SCell (herein, SCell #2). Alternatively, as illustrated in Fig. 5B, BFR itself may not be configured in the SpCell.

Further, option 0 above (see Fig. 2A) may be applied as a configuration of an SR for BFR for the cell group (Alt. 1). Specifically, one PUCCH resource may be configured for an SR of the cell group, and one spatial relation may be configured in the PUCCH resource (that is, one beam/spatial relation may be configured for one PUCCH/PUCCH resource).

Since per-TRP BFR is not configured/supported in the SpCell, when a beam failure is detected in an SCell and an SR is triggered, the SR can be appropriately transmitted in the SpCell as long as the SpCell is not detected as a beam failure.

Alternatively, at least one of option 1 above and option 2 above may be applied as a configuration of an SR for BFR for the cell group (Alt. 2). That is, two beams/spatial relations may be configured for one PUCCH (or PUCCH resource) (option 1), or two beams/spatial relations may be configured for two PUCCHs (or PUCCH resources) (option 2).

### <<Beam failure in SpCell>>

In a case where a per-TRP BFR operation is not configured in an SpCell, cell-specific BFR may be applied to the SpCell. When a beam failure (for example, a TRP failure) is detected in the SpCell, an SR may be triggered.

A case where one PUCCH resource is configured for a cell group/SR, two spatial relations are configured in the PUCCH resource (option 1 above), and a beam failure is detected in an SpCell (or an SR is triggered on the basis of a beam failure of an SpCell) is assumed. In this case, the UE may transmit a default beam/default spatial relation for SR (or transmit an SR by using a default beam/default spatial relation).

Alternatively, a case where two PUCCH resources are configured for a cell group/SR, one spatial relation is configured in each PUCCH resource (option 2 above), and a beam failure is detected in an SpCell (or an SR is triggered on the basis of a beam failure of an SpCell) is assumed. In this case, the UE may transmit a default PUCCH/default PUCCH resource for SR (or transmit an SR by using a default PUCCH/default PUCCH resource).

Thus, when the UE has detected a beam failure in an SpCell in which a per-TRP BFR operation is not configured, the UE may control the transmission of an SR by using a default spatial relation (option 1) or a default PUCCH resource (option 2). Thereby, SR transmission can be appropriately controlled even in a case where a plurality of spatial relations/PUCCH resources for SR transmission are configured.

Alternatively, in a case where a per-TRP BFR operation is not configured in an SpCell, when a beam failure is detected in the SpCell, a BFR procedure using a PRACH (for example, a BFR procedure of Rel. 15) may be applied.

### <<Beam failure in SCell>>

### [Per-TRP BFR is not configured]

In a case where a per-TRP BFR operation is not configured in an SCell, cell-specific BFR may be applied to the SCell. When a beam failure (for example, a TRP failure) is detected in an SCell, an SR may be triggered. The SR may be transmitted by a PUCCH (for example, a PUCCH-SR) of an SpCell included in a cell group to which the SCell belongs.

### -Case B1

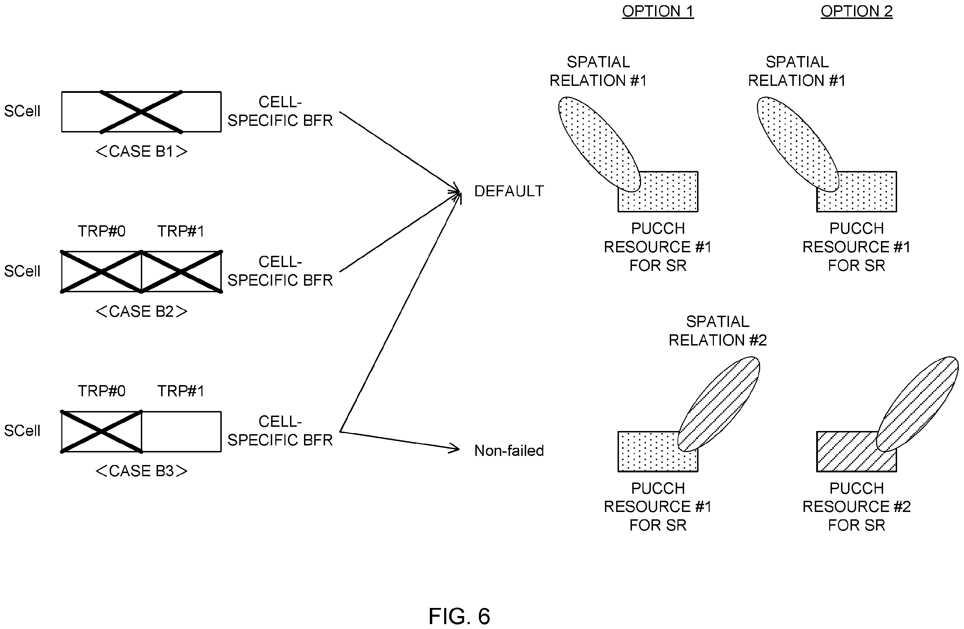

A case where one PUCCH resource is configured for a cell group/SR, two spatial relations are configured in the PUCCH resource (option 1 above), and a beam failure is detected in an SCell (or an SR is triggered on the basis of a beam failure of an SCell) is assumed. In this case, the UE may transmit a default beam/default spatial relation for SR (or transmit an SR by using a default beam/default spatial relation) (see case B1/option 1 of Fig. 6).

Alternatively, a case where two PUCCH resources are configured for a cell group/SR, one spatial relation is configured in each PUCCH resource (option 2 above), and a beam failure is detected in an SCell (or an SR is triggered on the basis of a beam failure of an SCell) is assumed. In this case, the UE may transmit a default PUCCH/default PUCCH resource for SR (or transmit an SR by using a default PUCCH/default PUCCH resource) (see case B1/option 2 of Fig. 6).

Thus, when the UE has detected a beam failure in an SCell, the UE may control the transmission of an SR by using a default spatial relation (option 1) or a default PUCCH resource (option 2). Thereby, SR transmission can be appropriately controlled even in a case where a plurality of spatial relations/PUCCH resources for SR transmission are configured.

In option 1, the default beam/default spatial relation for SR may be defined in advance in specifications, may be determined on the basis of a given rule (for example, the order of the indexes of spatial relations, or the like), or may be configured from a base station to the UE by higher layer signaling or the like. For example, the default beam/default spatial relation for SR may be the 1st spatial relation of an SR, the lowest spatial relation index (for example, the lowest spatial relation ID) of an SR, or a spatial relation of an SR associated with the lowest control resource set index (for example, lowest CORESETPoolIndex).

In option 2, the default PUCCH/default PUCCH resource for SR may be defined in advance in specifications, may be determined on the basis of a given rule (for example, the order of the indexes of PUCCH resources, or the like), or may be configured from a base station to the UE by higher layer signaling or the like. For example, the default PUCCH/default PUCCH resource for SR may be the 1st PUCCH resource for SR, the lowest PUCCH resource (for example, the lowest PUCCH resource ID) for SR, or a PUCCH resource for SR associated with the lowest control resource set index (for example, lowest CORESETPoolIndex).

### [Per-TRP BFR is configured]

In a case where a per-TRP BFR operation is configured in an SCell, a per-TRP BFR procedure may be applied to the SCell.

In a case where a plurality of TRPs (for example, TRP #0 and TRP #1) are included in an SCell and a beam failure (for example, a TRP failure) is detected in at least some of the TRPs (for example, TRP #0), an SR may be triggered.

### -Case B2

A case where one PUCCH resource is configured for a cell group/SR, two spatial relations are configured in the PUCCH resource (option 1 above), and beam failures are detected in all TRPs (for example, TRP #0 and TRP #1) (or an SR is triggered on the basis of beam failures of two TRPs) is assumed. In this case, the UE may transmit a default beam/default spatial relation for SR (or transmit an SR by using a default beam/default spatial relation) (see case B2/option 1 of Fig. 6).

Alternatively, a case where two PUCCH resources are configured for a cell group/SR, one spatial relation is configured in each PUCCH resource (option 2 above), and beam failures are detected in all TRPs (for example, TRP #0 and TRP #1) (or an SR is triggered on the basis of beam failures of two TRPs) is assumed. In this case, the UE may transmit a default PUCCH/default PUCCH resource for SR (or transmit an SR by using a default PUCCH/default PUCCH resource) (see case B2/option 2 of Fig. 6).

Thus, when the UE has detected beam failures in a plurality of TRPs (for example, all TRPs) of an SCell, the UE may control the transmission of an SR by using a default spatial relation (option 1) or a default PUCCH resource (option 2). Thereby, SR transmission can be appropriately controlled even in a case where a plurality of spatial relations/PUCCH resources for SR transmission are configured.

### -Case B3

Alternatively, a case where one PUCCH resource is configured for a cell group/SR, two spatial relations are configured in the PUCCH resource (option 1 above), and a beam failure is detected in TRP #0 (or an SR is triggered on the basis of a beam failure of TRP #0) is assumed. In this case, the UE may transmit a default beam/default spatial relation for SR (or transmit an SR by using a default beam/default spatial relation) (see case B3/option 1 of Fig. 6). Alternatively, the UE may transmit an SR by using a spatial relation (Non-failed) associated with another TRP (for example, TRP #1) (see case B3/option 1 of Fig. 6).

Alternatively, a case where two PUCCH resources are configured for a cell group/SR, one spatial relation is configured in each PUCCH resource (option 2 above), and a beam failure is detected in TRP #0 (or an SR is triggered on the basis of a beam failure of TRP #0) is assumed. In this case, the UE may transmit a default PUCCH/default PUCCH resource for SR (or transmit an SR by using a default PUCCH/default PUCCH resource) (see case B3/option 2 of Fig. 6). Alternatively, the UE may transmit an SR by using a PUCCH for SR/PUCCH resource for SR (Non-failed) associated with another TRP (for example, TRP #1) (see case B3/option 2 of Fig. 6).

### (Second Aspect)

In a second aspect, a case where, in BFR, a plurality of SRs or a maximum of N (for example, N = 2) SRs can be configured for each cell group will be described. In the following description, N = 2 is taken as an example; however, the number of SRs that can be configured for a cell group is not limited to two.

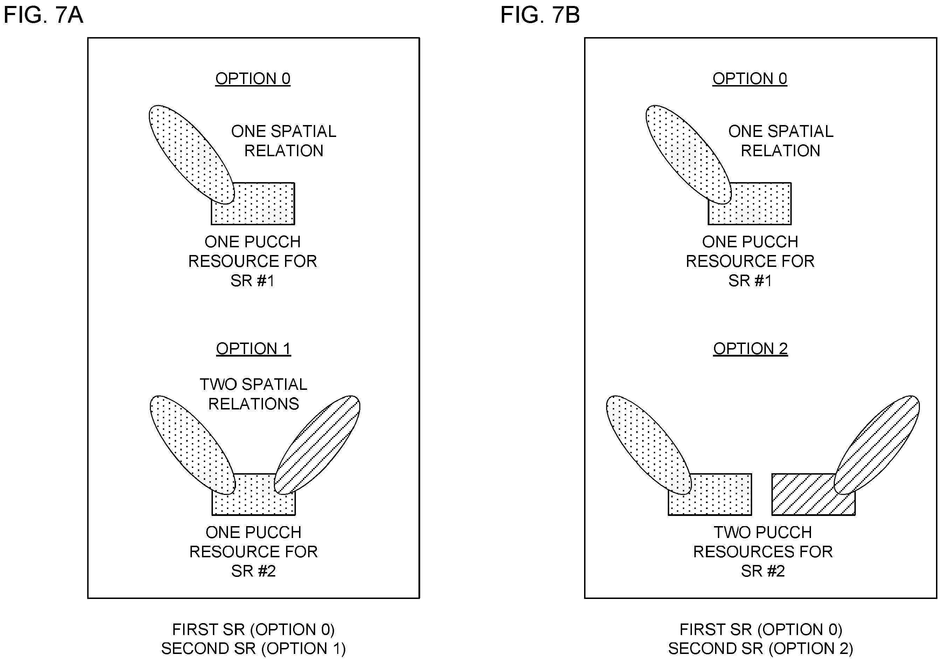

For example, two SR configurations taking account of different conditions may be configured for each cell group. As the two SRs (or SR configurations corresponding to the two SRs), an SR corresponding to option 0 above (for example, a first SR) and an SR corresponding to option 1/2 above (for example, a second SR) may be configured (see Fig. 7A and Fig. 7B).

Fig. 7A illustrates a case where a first SR configuration corresponding to option 0 and a second SR configuration corresponding to option 1 are configured for a cell group. Fig. 7B illustrates a case where a first SR configuration corresponding to option 0 and a second SR configuration corresponding to option 2 are configured for a cell group.

For example, one SR (for example, a first SR) may be configured for SCell BFR in Rel. 16, and one SR (for example, a second SR) may be configured for per-TRP BFR in Rel. 17.

The configuration conditions of the two SRs may conform to at least one of Alt. 2-1 to Alt. 2-3 below.

### <Alt. 2-1>

The configurations of the two SRs may be controlled on the basis of whether per-TRP BFR is configured for at least one serving cell included in a cell group or for no serving cell (for example, the presence or absence of the configuration).

In a case where per-TRP BFR is configured in at least one serving cell (for example, an SpCell or an SCell) in a cell group, two SRs may be configured (or two SR configurations may be supported). The first SR (or SR configuration) may be an SR corresponding to option 0 above, and the second SR (or SR configuration) may be an SR corresponding to option 1/2 above.

The UE may make control to transmit the first SR (for example, an SR corresponding to option 0) in a first condition. The first condition may be a case where an SR is triggered by beam failures of two TRPs of an SCell (an SCell in which per-TRP BFR is configured) or a case where an SR is triggered by a beam failure of an SCell (an SCell to which cell-specific BFR is applied).

The UE may make control to transmit the second SR (for example, an SR corresponding to option 1/2) in a second condition. The second condition may be a case where an SR is triggered by a beam failure of one TRP of an SpCell/SCell (an SpCell/SCell in which per-TRP BFR is configured). Thereby, SR transmission can be controlled taking account of a TRP (or a spatial relation/PUCCH resource) in which a beam failure is detected.

### <Alt. 2-2>

The configuration of the first SR and the configuration of the second SR may be separately controlled on the basis of different conditions. The different conditions may be cell types (SpCell/SCell) or configured/applied BFR types (cell-specific BFR/per-TRP BFR). For example, the configuration of one SR may be controlled on the basis of whether cell-specific BFR is applied to at least one SCell or to no SCell (for example, the presence or absence of the configuration), and the configuration of another SR may be controlled on the basis of whether per-TRP BFR is configured in at least one serving cell (SpCell/SCell) or in no serving cell (for example, the presence or absence of the configuration).

In a case where per-TRP BFR is not configured in (or cell-specific BFR is applied to) at least one SCell in a cell group, one SR (for example, the first SR corresponding to option 0) may be configured. Further, in a case where per-TRP BFR is configured in at least one serving cell (for example, an SpCell or an SCell) in a cell group, another SR (for example, the second SR corresponding to option 1/2) may be configured.

In a case where an SR is triggered by a beam failure of an SCell (an SCell to which cell-specific BFR is applied), the UE may make control to transmit the first SR (an SR corresponding to option 0).

On the other hand, in a case where an SR is triggered by beam failure detection of an SpCell/SCell (an SpCell/SCell in which per-TRP BFR is configured), the UE may make control to transmit the second SR (an SR corresponding to option 1/2). Thereby, SR transmission can be controlled taking account of a TRP (or a spatial relation/PUCCH resource) in which a beam failure is detected.

### <Alt. 2-3>

The configuration of the first SR and the configuration of the second SR may be separately controlled on the basis of different conditions. The different conditions may be cell types (SpCell/SCell) or configured/applied BFR types (cell-specific BFR/per-TRP BFR). For example, the configuration of one SR may be controlled on the basis of whether BFR (for example, cell-specific BFR/per-TRP BFR) is applied to at least one SCell or to no SCell (for example, the presence or absence of the configuration), and the configuration of another SR may be controlled on the basis of whether per-TRP BFR is configured in an SpCell or not (for example, the presence or absence of the configuration).

In a case where BFR (for example, per-TRP BFR, or BFR specific to the cell/in units of cells) is configured in at least one SCell in a cell group, one SR (for example, the first SR corresponding to option 0) may be configured. Further, another SR (for example, the second SR corresponding to option 1/2) may be configured only in a case where per-TRP BFR is configured in an SpCell.

The UE may make control to transmit the second SR (for example, an SR corresponding to option 1/2) only when a beam failure in one TRP (for example, TRP #0) of an SpCell is detected. When transmitting the second SR, the UE may use a spatial relation related to another TRP (for example, TRP #1) (option 1), or may use a PUCCH for SR/PUCCH resource for SR related to another TRP (for example, TRP #1) (option 2).

Otherwise (for example, except when a beam failure in one TRP of an SpCell is detected), the UE may make control to transmit the first SR (for example, an SR corresponding to option 0).

### (Third Aspect)

In a third aspect, an example of association between a TRP index and a PUCCH-resource-for-SR index will be described.

The third aspect may be applied in the first aspect/second aspect/fourth aspect. Further, the third aspect may be applied to a case where at least one of rule 1 to rule 3 below is used as a rule of selection of a PUCCH resource for SR.

Rule 1: A PUCCH resource for SR associated with another TRP (for example, a non-failed BFD-RS set) is selected
Rule 2: A PUCCH resource for SR associated with a TRP in which a beam failure is detected (for example, a failed BFD-RS set) is selected
Rule 3: A PUCCH resource for SR is selected by the implementation of the UE (UE implementation)

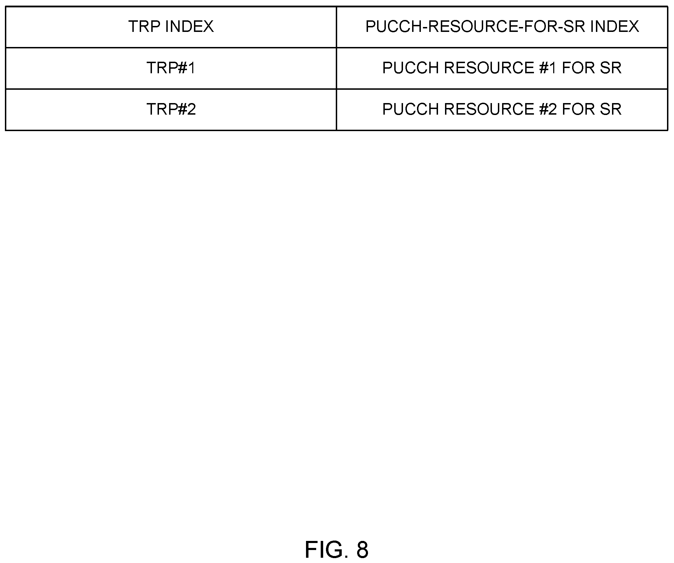

In the UE, an association between a PUCCH-resource-for-SR index and a TRP index may be configured for each BWP/each cell. For example, using a given higher layer parameter (for example, BFR-Config), the base station may configure/notify the UE with/of an association between a PUCCH-resource-for-SR index and a TRP index for each BWP/each cell by using RRC/MAC CE (see Fig. 8).

Fig. 8 illustrates a case where TRP #1 and PUCCH resource for SR #1 correspond to each other and TRP #2 and PUCCH resource for SR #2 correspond to each other. The number of TRPs and the number of PUCCH resources for SR are not limited thereto.

Note that a configuration in which the TRP index is not designated (or defined/introduced) is possible. In this case, the TRP index may be indicated by at least one of a CORESET pool index (for example, {0, 1}), an index (for example, {first TCI state, second TCI state}) of an extended TCI state (for example, an enhanced TCI state for PDSCH MAC CE) of a MAC CE for PDSCH, and an index (for example, {first BFD/NBI RS set, second BFD/NBI RS set}) of an RS set of BFD/NBI.

Rule 1 or rule 2 may indicate that there is relevance between a PUCCH resource for SR and a TRP. Further, which PUCCH resource for SR to transmit may be selected on the basis of a given condition (for example, relevance).

### (Fourth Aspect)

In a fourth aspect, an example of association between a TRP index and an SR configuration/ID or association between a TRP index and a spatial relation of a PUCCH for SR will be described.

A configuration in which two PUCCH resources for SR correspond to one SR configuration/ID for each TRP or a configuration in which two SR configurations/IDs correspond to each TRP may be supported.

In the current specifications (for example, Rel. 16 or earlier), up to one SR resource (or PUCCH resource for SR) is defined for one SR configuration/ID. Thus, in a case where two or more PUCCH resources for SR are made to correspond to one SR configuration/ID, a UE operation in the fourth aspect (for example, a condition for triggering an SR configuration/ID (or PUCCH for SR), or the like) may be applied.

In a case where a plurality of (for example, two) PUCCH resources for SR (or one or more PUCCH resources for SR having a plurality of spatial relations) are made to correspond to one SR configuration/ID, the UE/base station may control the UE operation/base station operation on the basis of at least one of option 4-1 and option 4-2 below.

### <Option 4-1>

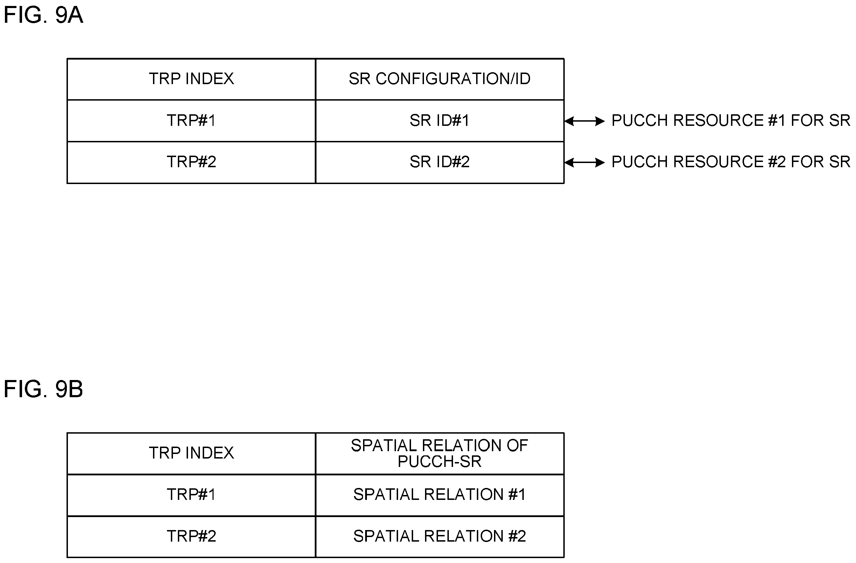

A case where two SR IDs (for example, SR configurations/IDs) are configured for BFR is assumed. In this case, a configuration of association may be supported between an SR configuration/ID and a TRP. The association between an SR configuration/ID and a TRP may be configured from a base station to the UE by using RRC/MAC CE or the like (see Fig. 9A).

Fig. 9A illustrates a case where TRP #1 and SR ID #1 are associated with each other and TRP #2 and SR ID #2 are associated with each other. The number of TRPs and the number of SR IDs are not limited thereto.

Further, SR ID #1 may correspond to PUCCH resource for SR #1, and SR ID #2 may correspond to PUCCH resource for SR #2. The association between an SR ID and a PUCCH resource for SR may be configured/indicated from a base station to the UE by RRC/MAC CE/DCI.

Separate (for example, different) spatial relations may be configured for different PUCCH resources for SR.

The UE may, on the basis of the association, decide/determine which PUCCH resource for SR to transmit for a different case (or for each case).

For example, when a beam failure is detected in a TRP, a PUCCH for SR corresponding (or related) to an SR configuration/ID associated with the TRP in which the beam failure is detected (for example, a failed TRP) may be transmitted.

Alternatively, when a beam failure is detected in a TRP, a PUCCH for SR corresponding to an SR configuration/ID associated with a TRP (for example, a TRP in which a beam failure is not detected (a non-failed TRP)) different from the TRP in which the beam failure is detected may be transmitted.

### <Option 4-2>

A case where one SR ID (for example, an SR configuration/ID) is configured for BFR and two spatial relations correspond to one PUCCH resource for SR is assumed. In this case, a configuration of association may be supported between a spatial relation and a TRP. The association between a spatial relation and a TRP may be configured from a base station to the UE by using RRC/MAC CE or the like (see Fig. 9B).

Fig. 9B illustrates a case where TRP #1 and spatial relation #1 are associated with each other and TRP #2 and spatial relation #2 are associated with each other. The number of TRPs and the number of spatial relations are not limited thereto.

The UE may, on the basis of the association, decide which spatial relation to select/apply to the transmission of a PUCCH for SR for a different case (or for each case).

For example, when a beam failure is detected in a TRP, a PUCCH for SR may be transmitted by applying a spatial relation associated with the TRP in which the beam failure is detected (for example, a failed TRP).

Alternatively, when a beam failure is detected in a TRP, a PUCCH for SR may be transmitted by applying a spatial relation associated with a TRP (for example, a TRP in which a beam failure is not detected (a non-failed TRP)) different from the TRP in which the beam failure is detected.

Note that the different case may be at least one of case 4-1 to case 4-4 below.

Case 4-1 corresponds to a case where, under a situation where TRP-specific BFR is configured, a beam failure/TRP failure occurs in a TRP (for example, one TRP) of at least one SpCell/SCell.

Case 4-2 corresponds to a case where, under a situation where TRP-specific BFR is configured, a beam failure/SCell failure occurs in at least one SCell.

Case 4-3 corresponds to a case where, under a situation where TRP-specific BFR is configured in a cell, beam failures or different TRP failures occur in different TRPs in one or more (or more than one) such cells (for example, SpCells/SCells).

Case 4-4 corresponds to a case where, under a situation where TRP-specific BFR is configured, a beam failure (or TRP failure) occurs in a TRP of a cell among one or more (or more than one) SpCells/SCells, and under a situation where cell-specific BFR is configured, a beam failure occurs in another SCell.

Thus, an association between a TRP index and an SR configuration/ID or an association between a TRP index and a spatial relation of a PUCCH for SR is configured, and the transmission of an SR (or PUCCH for SR) is controlled on the basis of the association; thereby, a UE operation in BFR can be appropriately controlled.

### (UE Capability Information)

In the first to fourth aspects, the following UE capability may be configured. Note that the following UE capability may be read as a parameter (for example, a higher layer parameter) configured from a network (for example, a base station) to the UE.

UE capability information regarding whether or not the UE supports an SR for BFR (for example, per-TRP BFR) in which two PUCCH resources are configured may be defined.

UE capability information regarding whether or not the UE supports a default PUCCH resource for an SR for BFR may be defined.

UE capability information regarding whether or not the UE supports an SR for BFR (for example, per-TRP BFR) in which one PUCCH resource having two spatial relations is configured may be defined.

UE capability information regarding whether or not the UE supports a default spatial relation for an SR for BFR may be defined.

UE capability information regarding whether or not the UE supports an SpCell in which per-TRP BFR is configured may be defined.

UE capability information regarding whether or not the UE supports an SCell in which per-TRP BFR is configured may be defined.

UE capability information regarding the maximum number of SCells/serving cells in which per-TRP BFR can be configured may be defined for each cell group.

Each of the first to fourth aspects may be designed as a configuration applied to a UE that supports/reports at least one of the UE capabilities described above. Alternatively, each of the first to fourth aspects may be designed as a configuration applied to a UE that is configured from a network.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

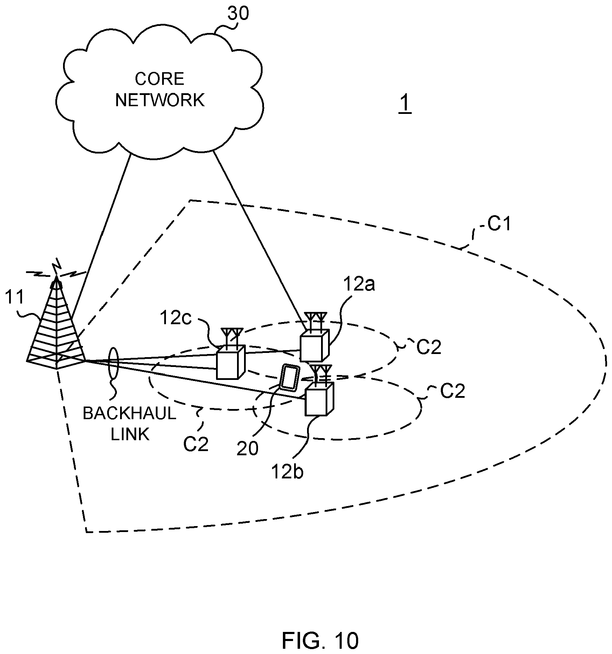

Fig. 10 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

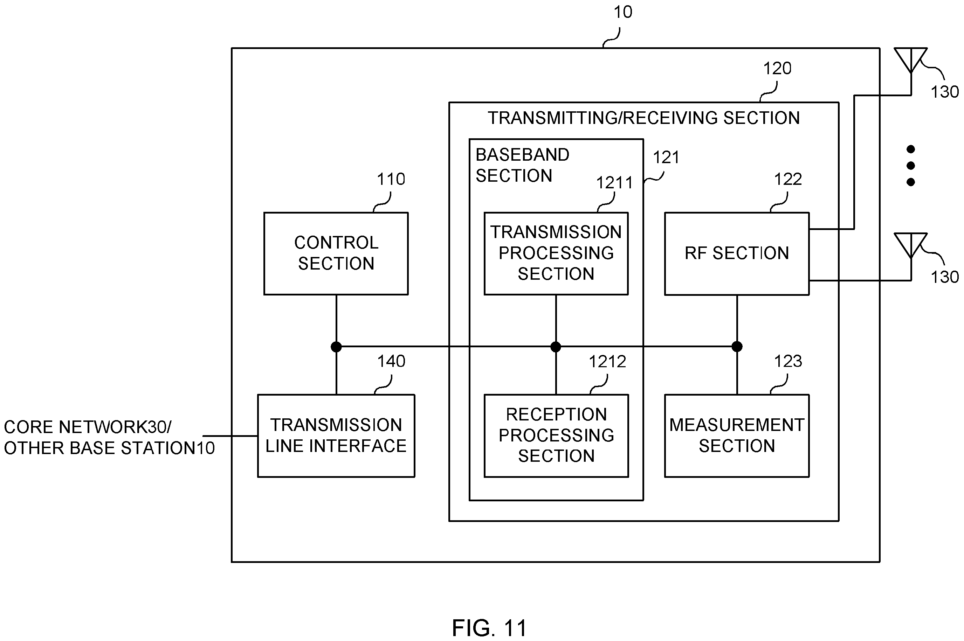

Fig. 11 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may be implemented by the reception processing section 1212, the RF section 122, and the measurement section 123.

The transmitting/receiving antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may transmit information regarding a configuration of beam failure detection for each transmission/reception point (TRP) and information regarding a configuration of an uplink control channel resource corresponding to a scheduling request.

When a terminal has detected a beam failure in a first TRP, the control section 110 may control the reception of a scheduling request transmitted from the terminal by using one of an uplink control channel resource corresponding to the first TRP and an uplink control channel resource corresponding to a second TRP different from the first TRP.

### (User Terminal)

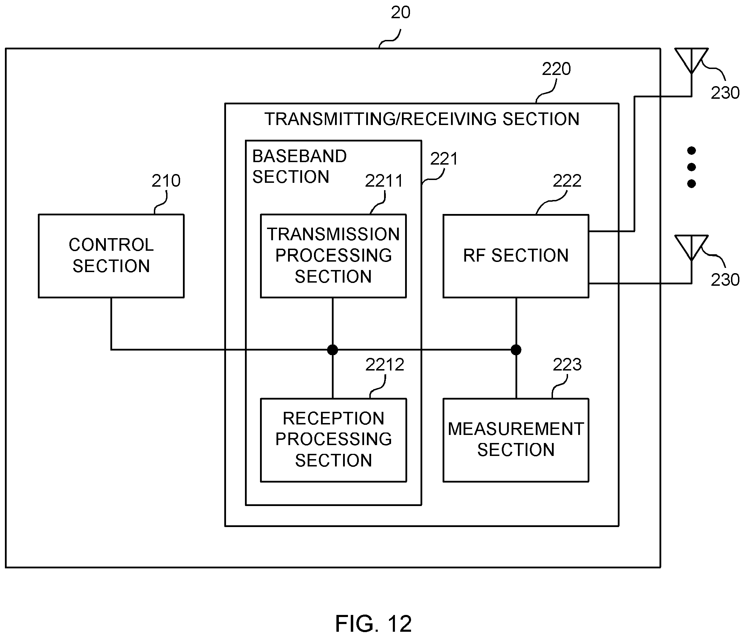

Fig. 12 is a diagram illustrating an example of a configuration of the user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmitting/receiving antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a given channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmitting/receiving antenna 230.

The transmitting/receiving section 220 may receive information regarding a configuration of beam failure detection for each transmission/reception point (TRP) and information regarding a configuration of an uplink control channel resource corresponding to a scheduling request.

The transmitting/receiving section 220 may perform information regarding an association between an index of a TRP and an index of an uplink control channel resource corresponding to a scheduling request. The transmitting/receiving section 220 may receive information regarding an association between a TRP index and an index of configuration information of a scheduling request. The transmitting/receiving section 220 may receive information regarding an association between a TRP index and an index of a spatial relation of an uplink control channel resource corresponding to a scheduling request.

When a beam failure is detected in a first TRP, the control section 210 may control the transmission of a scheduling request by using one of an uplink control channel resource corresponding to the first TRP and an uplink control channel resource corresponding to a second TRP different from the first TRP.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

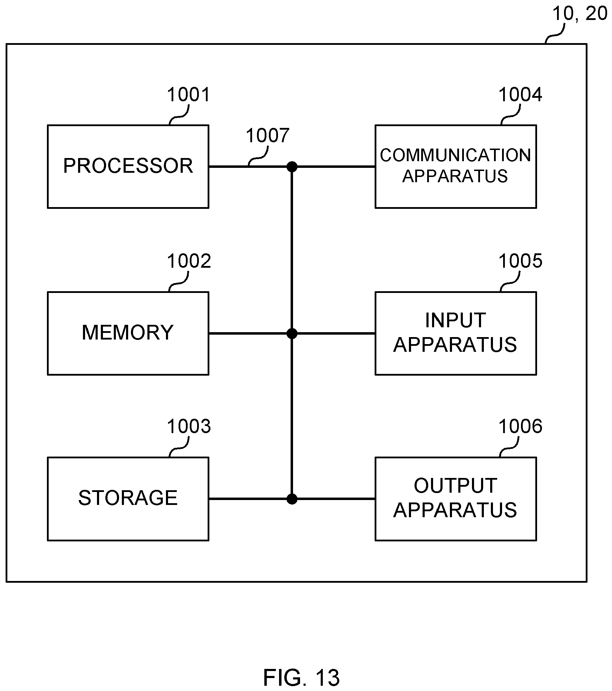

For example, the base station, the user terminal, and the like according to one embodiment of the present disclosure may function as a computer that executes the processing of the radio communication method of the present disclosure. Fig. 13 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. When the TTI is given, a time interval (e.g., the number of symbols) to which a transport block, a code block, a codeword, or the like is actually mapped may be shorter than the TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

Also, an RB may include one or more symbols in the time domain, and may be one slot, one mini slot, one subframe or one TTI in length. One TTI, one subframe, etc. may each be comprised of one or more resource blocks.

Note that one or more RBs may be referred to as a physical resource block (PRB), a sub-carrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Also, MAC signaling may be reported using, for example, a media access control control element (MAC Control Element (CE)).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "reference signal (RS port group)", "layer", "number of layers", "rank", "resource", "resource set", "resource group", "beam", "beam width", "beam angle", "antenna", "antenna element", "panel", and "transmission/reception point" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, etc. may be replaced with a side channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2021-088742 filed on May 26, 2021. The contents of this are all incorporated herein.

## Claims

1. A terminal comprising:
a receiving section that receives information regarding a configuration of beam failure detection for each transmission/reception point (TRP) and information regarding a configuration of an uplink control channel resource corresponding to a scheduling request; and
a control section that, when a beam failure is detected in a first TRP, controls transmission of a scheduling request by using one of an uplink control channel resource corresponding to the first TRP and an uplink control channel resource corresponding to a second TRP different from the first TRP.

2. The terminal according to claim 1, wherein the receiving section receives information regarding an association between an index of the TRP and an index of an uplink control channel resource corresponding to the scheduling request.

3. The terminal according to claim 1 or 2, wherein the receiving section receives information regarding an association between an index of the TRP and an index of configuration information of the scheduling request.

4. The terminal according to claim 1 or 2, wherein the receiving section receives information regarding an association between an index of the TRP and an index of a spatial relation of an uplink control channel resource corresponding to the scheduling request.

5. A radio communication method for a terminal comprising:
receiving information regarding a configuration of beam failure detection for each transmission/reception point (TRP) and information regarding a configuration of an uplink control channel resource corresponding to a scheduling request; and
when a beam failure is detected in a first TRP, controlling transmission of a scheduling request by using one of an uplink control channel resource corresponding to the first TRP and an uplink control channel resource corresponding to a second TRP different from the first TRP.

6. A base station comprising:
a transmitting section that transmits, to a terminal, information regarding a configuration of beam failure detection for each transmission/reception point (TRP) and information regarding a configuration of an uplink control channel resource corresponding to a scheduling request; and
a control section that, when the terminal has detected a beam failure in a first TRP, controls reception of a scheduling request transmitted from the terminal by using one of an uplink control channel resource corresponding to the first TRP and an uplink control channel resource corresponding to a second TRP different from the first TRP.
